# EUROPÄISCHE PATENTSCHRIFT

(11) **EP 3 515 034 B1**
(45) Veröffentlichungstag und Bekanntmachung des Hinweises auf die Patenterteilung: **13.05.2020**
(21) Anmeldenummer: 18152157.6
(22) Anmeldetag: 17.01.2018
(51) Int. Cl.: H04L 29/12, H04L 29/06

(54) **VERFAHREN, VORRICHTUNGEN, COMPUTERLESBARE MEDIEN UND SYSTEME ZUM AUFBAU ZERTIFIZIERTER VERBINDUNGEN MIT ENDGERÄTEN IN EINEM LOKALEN NETZWERK**
METHOD, DEVICES, COMPUTER-READABLE MEDIA AND SYSTEMS FOR ESTABLISHING CERTIFIED CONNECTIONS WITH END DEVICES IN A LOCAL AREA NETWORK
PROCÉDÉS, DISPOSITIFS, SUPPORTS LISIBLES PAR ORDINATEUR ET SYSTÈMES D'ÉTABLISSEMENT DES LIAISONS CERTIFIÉES AVEC DES TERMINAUX DANS UN RÉSEAU LOCAL

(43) Veröffentlichungstag der Anmeldung: 24.07.2019
(73) Patentinhaber: ise Individuelle Software und Elektronik GmbH, 26122 Oldenburg (DE)
(72) Erfinder: Sahm, Christoph, 26131 Oldenburg (DE)
(74) Vertreter: Angerhausen, Christoph

(56) Entgegenhaltungen:
- US-A1- 2016 277 446
- US-A1- 2017 272 316
- US-B1- 8 549 300

## Beschreibung

### Gebiet

Die vorliegende Patentanmeldung bezieht sich auf Verfahren, Vorrichtungen, computerlesbare Medien und Systeme zum Aufbau zertifizierter Verbindungen mit Endgeräten in einem lokalen Netzwerk, insbesondere zum Aufbau zertifizierter Verbindungen zwischen Endgeräten in einem lokalen Netzwerk.

### HINTERGRUND

Zur Verschlüsselung von Verbindungsanfragen, insbesondere über HTTP, hat sich das SSL- beziehungsweise TLS-Protokoll durchgesetzt. Beispielsweise werden SSL-Zertifikate von unabhängigen Zertifizierern an Betreiber von Webseiten vergeben. Bei Verbindungsanfragen an einen zertifizierten Webserver kann ein Client anhand des Zertifikats sicherstellen, dass die Webseite authentisch ist.

Auf Webserver, die in einem lokalen Netzwerk liegen, kann von außerhalb des lokalen Netzwerks nicht ohne weiteres zugegriffen werden. Herkömmliche Techniken, wie etwa Virtual Private Networks (VPN), ermöglichen derartige Verbindungen, sind jedoch aufwendig in der Konfiguration. Insbesondere müssen VPN neu konfiguriert werden, wenn sich die Konstellation von Webservern in dem lokalen Netzwerk ändert. Die Konfiguration erfolgt in der Regel manuell durch einen Systemadministrator. Eine Authentifizierung mittels Zertifikaten wird für solche Webserver üblicherweise nicht durchgeführt.

### ZUSAMMENFASSUNG

Der hier offenbarten Erfindung liegt die Aufgabe zugrunde, zertifizierte Verbindungen zu Endgeräten in einem lokalen Netzwerk zu ermöglichen, wobei sowohl Verbindungen zwischen Endgeräten in dem lokalen Netzwerk als auch zwischen einem Endgerät in dem lokalen Netzwerk und einem Client außerhalb des lokalen Netzwerks ermöglicht werden sollen.

Eine erste Ausführungsform zur Lösung der Aufgabe betrifft ein System, umfassend: einen Client, einen Server, eine mit dem Server verbundene Service-Komponente und wenigstens ein Endgerät, das mit der Service-Komponente verbunden ist, wobei der Server für jedes der Endgeräte einen Host-Namen bereitstellt, der dem jeweiligen Endgerät sowie der Service-Komponente zugeordnet ist, wobei der Server eingerichtet ist, als Antwort auf eine Verbindungsanfrage des Clients oder eines der Endgeräte an einen der Host-Namen die Verbindungsanfrage an die Service-Komponente weiterzuleiten, wobei die Service-Komponente eingerichtet ist, als Antwort auf eine Verbindungsanfrage an einen der Host-Namen zu prüfen, ob für das Endgerät, dem der Host-Name zugeordnet ist, ein Zertifikat zur Verschlüsselung einer Verbindung vorliegt, wobei die Service-Komponente von einem Zertifizierer ein Zertifikat anfordert, falls kein Zertifikat vorliegt, und anhand des Zertifikats die Verbindung verifiziert, und wobei die Service-Komponente ferner eingerichtet ist, ein eintreffendes Datenpaket, das an den Host-Namen oder eine entsprechende IP-Adresse adressiert ist, ohne Umweg über den Server direkt an das entsprechende Endgerät weiterzuleiten, wenn eine Verbindung, die dem Datenpaket zugeordnet ist, von einem der Endgeräte aufgebaut worden war, und das Datenpaket an den Server weiterzuleiten, wenn die Verbindung nicht von einem der Endgeräte aufgebaut worden war.

US 2017/272316 A1 offenbart ein Zertifikate-basiertes Authentifizierungssystem. Ein Sicherheitsgateway speichert digitale Zertifikate. Bei Erhalt einer Nachricht von einem Client wird anhand eines Bezeichners dieser Nachricht ein Zertifikat nachgeschlagen und zur Authentifizierung einer Ressource, auf die zugegriffen soll, verwendet. Insbesondere kann die Service-Komponente ferner eingerichtet sein, anhand einer Routingtabelle zu bestimmen, ob eine Verbindung, die einem eintreffenden Datenpaket zugeordnet ist, von einem der Endgeräte aufgebaut worden war, wobei die Routingtabelle wenigstens eine Herkunftadresse des jeweiligen Endgerätes sowie einen eindeutigen Bezeichner der jeweiligen Verbindung enthält.

Darüber hinaus kann der eindeutige Bezeichner ein Verbindungsport, eine IP-Adresse oder eine Kombination aus einem Verbindungsport und einer IP-Adresse sein.

Ferner kann wenigstens eines der Endgeräte mit der Service-Komponente identisch sein.

Vorzugsweise ist in dem Host-Namen eine lokale Adresse oder der lokale Host-Name eines der Endgeräte enthalten.

Weitere Ausführungsformen betreffen eine Service-Komponente, die mit einem Server verbunden und eingerichtet ist, als Antwort auf eine Verbindungsanfrage an einen Host-Namen, der von dem Server für ein mit der Service-Komponente verbundenes Endgerät bereitgestellt wird, zu prüfen, ob für das Endgerät ein Zertifikat zur Verschlüsselung einer Verbindung vorliegt, wobei die Service-Komponente von einem Zertifizierer ein Zertifikat anfordert, falls kein Zertifikat vorliegt, und anhand des Zertifikats die Verbindung verifiziert, und wobei die Service-Komponente ferner eingerichtet ist, ein eintreffendes Datenpaket, das an den Host-Namen oder eine entsprechende IP-Adresse adressiert ist, ohne Umweg über den Server direkt an das Endgerät weiterzuleiten, wenn eine Verbindung, die dem Datenpaket zugeordnet ist, von einem mit der Service-Komponente verbundenen Endgerät aufgebaut worden war, und das Datenpaket an den Server weiterzuleiten, wenn die Verbindung nicht von einem mit der Service-Komponente verbundenen Endgerät aufgebaut worden war. Insbesondere kann die Service-Komponente ferner eingerichtet sein, anhand einer Routingtabelle zu bestimmen, ob eine Verbindung, die einem eintreffenden Datenpaket zugeordnet ist, von einem der Endgeräte aufgebaut worden war, wobei die Routingtabelle wenigstens eine Herkunftadresse des jeweiligen Endgerätes sowie einen eindeutigen Bezeichner der jeweiligen Verbindung enthält.

Darüber hinaus kann der eindeutige Bezeichner ein Verbindungsport, eine IP-Adresse oder eine Kombination aus einem Verbindungsport und einer IP-Adresse sein.

In bestimmten Ausführungsformen ist wenigstens eines der Endgeräte mit der Service-Komponente identisch.

Vorzugsweise ist in dem Host-Namen eine lokale Adresse oder ein lokaler Host-Name eines der Endgeräte enthalten.

Ausführungsformen der Erfindung betreffen außerdem ein Verfahren, umfassend: Bereitstellen, durch einen mit einer Service-Komponente verbundenen Server, eines jeweiligen Host-Namens für ein oder mehrere mit der Service-Komponente verbundene Endgeräte, Prüfen, durch die Service-Komponente als Antwort auf eine Verbindungsanfrage an einen der Host-Namen, ob für das dem Host-Namen entsprechende Endgerät ein Zertifikat zur Verschlüsselung einer Verbindung vorliegt, wobei die Service-Komponente von einem Zertifizierer ein Zertifikat anfordert, falls kein Zertifikat vorliegt, und anhand des Zertifikats die Verbindung verifiziert, und Weiterleiten, durch die Service-Komponente, eines eintreffenden Datenpakets, das an den Host-Namen oder eine entsprechende IP-Adresse adressiert ist, ohne Umweg über den Server direkt an das entsprechende Endgerät, wenn eine Verbindung, die dem Datenpaket zugeordnet ist, von einem mit der Service-Komponente verbundenen Endgerät aufgebaut worden war, und Weiterleiten des Datenpakets an den Server, wenn die Verbindung nicht von einem mit der Service-Komponente verbundenen Endgerät aufgebaut worden war.

Einige Ausführungsformen umfassen ein Bestimmen, durch die Service-Komponente anhand einer Routingtabelle, ob eine Verbindung, die einem eintreffenden Datenpaket zugeordnet ist, von einem der Endgeräte aufgebaut worden war, wobei die Routingtabelle wenigstens eine Herkunftadresse des jeweiligen Endgerätes sowie einen eindeutigen Bezeichner der jeweiligen Verbindung enthält.

Insbesondere kann der eindeutige Bezeichner ein Verbindungsport, eine IP-Adresse oder eine Kombination aus einem Verbindungsport und einer IP-Adresse sein.

Vorzugsweise ist in dem Host-Namen eine lokale Adresse oder ein lokaler Host-Name eines der Endgeräte enthalten.

Weitere Ausführungsformen betreffen ein computerlesbares Medium mit Befehlen, die, wenn sie durch einen oder mehrere Prozessoren ausgeführt werden, erfindungsgemäße Verfahren gemäß den obigen Erläuterungen durchführen.

Eine erfinderische Tätigkeit wird erzielt durch Bereitstellen von Host-Namen für Endgeräte in lokalen Netzwerken, da diese Host-Namen zur Adressierung solcher Endgeräte von außerhalb der lokalen Netzwerke und damit auch zur Zertifizierung entsprechender Verbindungen eignen. Besonders erfinderisch ist dies in Kombination mit dem Routing von Datenpaketen an einer Service-Komponente, da diese mittels der Host-Namen beziehungsweise entsprechender IP-Adressen, an die ein Datenpaket adressiert ist, ermittelt, ob eine betreffende Verbindung an ein Netzwerk-internes Endgerät adressiert ist, und somit ein Routing über externe Geräte vermeidet. Dies ist insbesondere dann vorteilhaft, wenn eine Verbindung zwischen zwei Endgeräten in dem lokalen Netzwerk aufgebaut wurde, da diese einerseits zertifiziert werden kann und andererseits lediglich Netzwerk-intern geroutet zu werden braucht. Die Erfindung senkt somit den Routing-Aufwand und beschleunigt die Auslieferung von Datenpaketen, unter gleichzeitiger Begünstigung zertifizierter sicherer Verbindungen.

### KURZE BESCHREIBUNG DER ZEICHNUNGEN

- Figur 1: zeigt ein System gemäß Ausführungsformen der Erfindung.
- Figur 2: zeigt ein erstes Verfahren gemäß Ausführungsformen der Erfindung.
- Figur 3: zeigt ein zweites Verfahren gemäß Ausführungsformen der Erfindung.

### AUSFÜHRLICHE BESCHREIBUNG

Gemäß einer ersten Ausführungsform der Erfindung richtet ein Client, der außerhalb eines lokalen Netzwerks liegt, eine Verbindungsanfrage an ein Endgerät, das innerhalb des lokalen Netzwerks liegt. Geräte innerhalb lokaler Netzwerke sind nicht ohne weiteres von außerhalb zu adressieren, da sie über keine globale Internet-Adresse (IP) verfügen, sondern lediglich über eine lokale Adresse, beispielsweise 192.168.0.3, oder einen lokalen Host-Namen, der beziehungsweise die nach außen nicht sichtbar ist. Um solche Endgeräte trotzdem adressieren zu können, werden durch einen Server, beispielsweise einen Server außerhalb des lokalen Netzwerks, für Endgeräte innerhalb des lokalen Netzwerks Host-Namen bereitgestellt. Das IP-Protokoll erlaubt, dass einer IP-Adresse ein oder mehrere Host-Namen zugeordnet werden können.

Host-Namen sind Domain-Name-Service (DNS)-Namen, die von DNS-Servern einer IP-Adresse zugeordnet werden können, um Pakete mittels Routing an ihr Ziel zu leiten. Host-Namen entsprechen einer global gültigen IP-Adresse eines Servers, werden gemäß der vorliegenden Erfindung jedoch auf lokale IP-Adressen oder lokale Host-Namen bestimmter Endgeräte abgebildet, und Datenpakete gegebenenfalls an diese weitergeleitet. Im Folgenden wird unter einer lokalen IP-Adresse auch ein lokaler Host-Name verstanden.

Die Verbindungsanfrage kann etwa durch Interaktion eines Benutzers mit einem Webbrowser auf dem Client ausgelöst werden und in Form eines HTTP-Request erfolgen. Alternativ kann die Verbindungsanfrage mittels eines anderen Protokolls erfolgen, beispielsweise mittels FTP oder SSH, das geeignet ist, zur Adressierung Host-Namen zu verwenden.

Der Server ist mit wenigstens einer Service-Komponente verbunden. In einer Ausführungsform ist die Service-Komponente ein herkömmliches Gateway zwischen einem lokalen Netzwerk und anderen Netzwerken, beispielsweise des Internets, die sich außerhalb des lokalen Netzwerks befinden. Jedoch verfügt die Service-Komponente über weitergehende Funktionalität, die nachfolgend erläutert wird. Die Service-Komponente kann auch Bestandteil des Servers sein oder als separate Einheit vorliegen, und kann als Schaltung oder als Software ausgeführt sein. Sie ist mit einem oder mehreren Endgeräten innerhalb des lokalen Netzwerks verbunden. Endgeräte in dem lokalen Netzwerk können als Computereinrichtung mit einem Webserver ausgeführt sein oder als andere Server, die entsprechend einem Protokoll der Verbindungsanfrage des Client arbeiten. Jegliche Verbindung zwischen diesen Endgeräten und dem Client erfolgt über die Service-Komponente. Insofern kann die Service-Komponente auch als Proxy oder Firewall des lokalen Netzwerks eingerichtet sein, über die jegliche Kommunikation zwischen den Endgeräten und Clients außerhalb des lokalen Netzwerks vermittelt wird.

Gemäß einer besonderen Ausführungsform erhält der Server sämtliche Pakete, die von außerhalb des Netzwerks an eine ihm zugeordnete IP-Adresse beziehungsweise einen oder mehrere ihm zugeordnete oder von ihm bereitgestellte DNS-/Host-Namen gerichtet sind. In einer Ausführungsform extrahiert der Server aus dem Host-Namen eine erste Zeichenkette, um eine lokale Adresse des betreffenden Endgerätes, beispielsweise eine IP-Adresse, zu ermitteln, an die die Verbindungsanfrage weiterzuleiten ist. Vorteilhafterweise wird hierzu eine Anfangszeichenkette des Host-Namens untersucht. Host-Namen sind üblicherweise durch Punkte (.) unterteilt, wobei die Zeichenkette nach dem letzten Punkt die Top-Level-Domain (TLD) darstellt, beispielsweise ".de". Die Anfangszeichenkette steht beispielsweise vor dem ersten Punkt in dem Host-Namen und kann etwa mittels eines regulären Ausdrucks (regulär expression) extrahiert werden. Die zu ermittelnde lokale Adresse kann in dieser Anfangszeichenkette enthalten sein, wobei die vier Adressbestandteile der lokalen IP-Adresse (üblicherweise zweimal 8 Bit einer Netzwerk-ID, 8 Bit einer Subnetz-ID und 8 Bit einer Host-ID) in der Anfangszeichenkette durch vorbestimmte Trennsymbole voneinander getrennt sind, die sich von den üblichen Punkten als Trennsymbol unterscheiden.

Ein Beispiel für einen solchen Host-Namen lautet 192-168-137-12.my-sda.net, wobei die Anfangszeichenkette 192-168-137-12 lautet. Gemäß einer Ausführungsform kann der Server anhand dieser Anfangszeichenkette die Service-Komponente ermitteln, die mit dem betreffenden Endgerät verbunden ist. Hierzu kann eine Adresse oder ein Bezeichner der Service-Komponente in einer Tabelle des Servers nachgeschlagen werden. In anderen Ausführungsformen ist auch der Bezeichner der Service-Komponente in dem Hostnamen enthalten und kann durch den Server ebenfalls extrahiert werden. Ein entsprechender Host-Name kann etwa 192-168-137-12.isyyyyyyp8.my-sda.net lauten, wobei der Bezeichner der Service-Komponente isyyyyyyp8 ist. In dieser Ausführungsform extrahiert der Server das zweite Feld des durch Punkte unterteilten Host-Namens und ermittelt dadurch den Bezeichner der Service-Komponente. Insbesondere können derartige Host-Namen auch Wildcards (*) enthalten, um unterschiedliche Adressen auf die gleiche Service-Komponente beziehungsweise das gleiche Endgerät abzubilden.

Der Server leitet die Verbindungsanfrage anhand der Adresse der Service-Komponente an diese weiter. Der Host-Name kann mitsamt der Verbindungsanfrage übermittelt werden.

Die Service-Komponente ermittelt nach Empfangen der Verbindungsanfrage das Endgerät, an das die Verbindungsanfrage adressiert ist. Dies erfolgt beispielsweise durch Ersetzen der Trennsymbole in der Anfangszeichenkette durch Punkte, so dass eine herkömmliche IP-Adresse entsteht, die in dem lokalen Netzwerk gültig ist. In dem konkreten Beispiel wird die lokale Adresse 192.168.137.12 ermittelt.

Außerdem prüft die Service-Komponente, ob für den Host-Namen des Endgerätes, an das die Verbindungsanfrage weitergeleitet werden soll, ein Zertifikat vorliegt. Die Art des Zertifikats wird durch das Protokoll der Verbindungsanfrage bestimmt. Beispielsweise wird für eine Verbindungsanfrage gemäß HTTPS ein SSL-Zertifikat oder TLS-Zertifikat benötigt. Das Bestimmen, ob ein Zertifikat vorliegt, kann beispielsweise durch Nachschlagen in einer lokalen Tabelle erfolgen, die auf der Service-Komponente gespeichert ist. Alternativ kann eine entsprechende Anforderung direkt an einen externen Zertifizierer gesendet werden. Liegt für das Endgerät kein Zertifikat vor, fordert die Service-Komponente bei dem externen Zertifizierer ein Zertifikat für dieses Endgerät an. In bestimmten Ausführungsformen wird für jedes Endgerät ein separates Zertifikat benötigt. Alternativ kann ein einziges Zertifikat für mehrere Endgeräte verwendet werden, beispielsweise ein Zertifikat für alle Endgeräte, die mit dieser Service-Komponente verbunden sind.

Liegt das Zertifikat vor, erwidert die Service-Komponente die Verbindungsanfrage durch Aufbauen einer Verbindung zu dem Client über den Server. Dieser Verbindungsaufbau erfolgt gemäß den für die Verwendung des Zertifikats üblichen Schritten. Beispielsweise wird das Zertifikat an den Client übermittelt, um diesem eine Überprüfung auf Authentizität des Servers zu ermöglichen. Ab diesem Punkt kann der Client mit dem Endgerät über Server und Service-Komponente Datenpakete austauschen. In bestimmten Ausführungsformen kann das Zertifikat verwendet werden, um die Verbindung zu verschlüsseln.

Die Erfindung umfasst insbesondere auch Verbindungen, die zwischen zwei Endgeräten desselben lokalen Netzwerks aufgebaut werden. Zum Aufbau einer Verbindung eines ersten Endgerätes mit einem zweiten Endgerät in dem gleichen lokalen Netzwerk genügt ein direkter Verbindungsaufbau zwischen beiden Endgeräten, sofern keine zertifizierte Verbindung benötigt wird. Vorteilhafterweise ermöglicht die Erfindung jedoch auch den Aufbau zertifizierter Verbindungen zwischen zwei lokalen Endgeräten. Hierzu sendet das erste Endgerät eine Verbindungsanfrage, die nicht etwa direkt an die lokale Adresse des zweiten Endgerätes, sondern an den von dem Server bereitgestellten Host-Namen oder die entsprechende globale IP-Adresse des zweiten Endgerätes adressiert ist.

Der bereitgestellte Host-Name kann beispielsweise durch eine Anforderung des Endgerätes an den Server ermittelt werden. In einer Ausführungsform stellt der Server hierzu einen Befehl bereit, mit dem Endgeräte oder auch Clients für eine bestimmte globale IP-Adresse den zugehörigen von Server bereitgestellten Host-Namen ermitteln können. Jedoch kann der Host-Name dem Endgerät auch auf andere Weise bekannt sein, etwa durch Synthese der lokalen IP-Adresse mit einem Bezeichner der Service-Komponente und weiteren Adressbestandteilen, beispielsweise der TLD.

Die Service-Komponente erhält die Verbindungsanfrage und prüft, etwa anhand einer Routingtabelle, an welchen Host die Verbindungsanfrage weitergeleitet wird. In einer ersten Ausführungsform erkennt die Service-Komponente, dass die Verbindungsanfrage an ein Endgerät innerhalb des lokalen Netzwerks gerichtet ist. Beispielsweise erkennt die Service-Komponente anhand des in der Verbindungsanfrage angegebenen Host-Namens, dass dem adressierten Host-Namen ein Endgerät in dem lokalen Netzwerk entspricht. In diesem Fall ermittelt die Service-Komponente, wie bereits erläutert, ob für das Ziel-Endgerät bereits ein Zertifikat vorliegt, und fordert gegebenenfalls ein Zertifikat von einem externen Zertifizierer an. Anschließend werden anhand des Zertifikats eine zertifizierte Verbindung zwischen beiden Endgeräten hergestellt.

Alternativ erkennt die Service-Komponente bei Erhalt der Verbindungsanfrage nicht, dass sich das adressierte Endgerät im gleichen lokalen Netzwerk wie das erste Endgerät befindet, und leitet die Verbindungsanfrage daher an den Server weiter. Dieser erkennt jedoch, beispielsweise anhand einer Abbildungstabelle, dass die Zieladresse einem Endgerät entspricht, das mit der Service-Komponente verbunden ist, und leitet die Verbindungsanfrage an die Service-Komponente weiter. Hierbei kann die Service-Komponente über die lokale IP-Adresse des zweiten Endgerätes verständigt werden, beispielsweise durch Ersetzen des entsprechenden Adressfelds in der Verbindungsanfrage. Die Service-Komponente prüft daraufhin, ob ein Zertifikat für das zweite Endgerät vorliegt, und fordert gegebenenfalls ein Zertifikat von einem externen Zertifizierer an. Anschließend initialisiert die Service-Komponente eine zertifizierte Verbindung zwischen dem ersten und dem zweiten Endgerät.

Treffen bei der Service-Komponente weitere Datenpakete ein, die von dem ersten Endgerät an das zweite Endgerät adressiert sind und zu der aufgebauten Verbindung gehören, so werden diese ohne Umweg über den Server an das zweite Endgerät übermittelt.

Somit ermöglicht die Erfindung zertifizierte Verbindungen zwischen Endgeräten innerhalb eines lokalen Netzwerks.

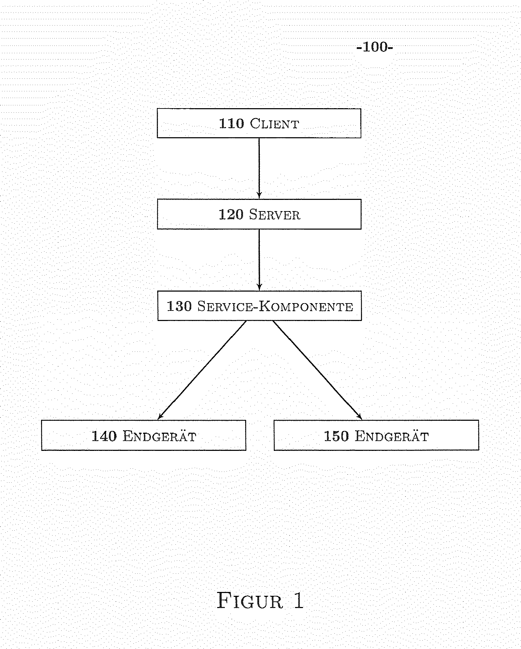

Figur 1 zeigt ein beispielhaftes System 100. Ein Server 120 ist eingerichtet, um Verbindungsanfragen eines Clients 110 zu erhalten. Nach Erhalt einer Verbindungsanfrage extrahiert der Server 120 in einer Ausführungsform eine Adresse eines Endgeräts aus einem Teil eines Host-Namens der Verbindungsanfrage. Beispielsweise ermittelt der Server, wie oben erläutert, eine lokale Netzwerkadresse eines Endgerätes, indem er eine Zeichenkette aus dem Host-Namen extrahiert. In einer Ausführungsform ist dies eine Anfangszeichenkette, die durch Trennsymbole unterteilte Adressfelder enthält und von der übrigen Zeichenkette des Host-Namens durch ein zweites Zeichen, etwa einen Punkt, getrennt ist. Alternativ kann die Adresse des Endgerätes aus einer anderen Zeichenkette, die an Stelle N in dem Host-Namen steht, oder einem N-ten Feld des Host-Namens extrahiert werden. Im letzteren Beispiel wird ein N-tes Feld ermittelt, indem die durch Punkte unterteilten Felder des Host-Namens betrachtet werden. Auf diese Weise kann der Server 120 beispielsweise die lokalen Adressen der Endgeräte 140 oder 150 bestimmen. Der Host-Name muss nicht unbedingt eine tatsächliche Adresse enthalten, sondern kann in bestimmten Ausführungsformen eine Kennung enthalten, die von dem Server über eine Tabelle auf eine tatsächliche IP-Adresse abgebildet wird. Derartige Ausführungsformen sind insofern von Vorteil, als dass sie nach außen diese Adressen nicht preisgeben. Ein weiterer Vorteil besteht darin, dass eine interne Änderung einer Adresse lediglich eine Aktualisierung der Tabelle erfordert, um unter dem gleichen Host-Namen auch die neue Adresse zu verwenden. Ein Bezeichner oder eine Adresse einer Service-Komponente, mit der das adressierte Endgerät verbunden ist, kann mittels Nachschlagen der Adresse des Endgerätes in einer Tabelle des Servers ermittelt werden. In bestimmten Ausführungsformen werden jedoch sowohl die lokale IP-Adresse des Endgerätes als auch die jeweilige Service-Komponente aus dem Host-Namen ermittelt.

Der Server benachrichtigt die betreffende Service-Komponente, beispielsweise Service-Komponente 130. Beispielsweise kann der Server hierzu die Verbindungsanfrage neu adressieren und den Host-Namen durch die lokale IP-Adresse des Endgerätes ersetzen und die Verbindungsanfrage an die Service-Komponente 130 leiten.

Die Service-Komponente 130 prüft, ob für die Adresse des Endgerätes bereits ein Zertifikat vorliegt. Hierzu kann als Adresse entweder der Host-Name des Endgerätes, soweit noch in der Verbindungsanfrage enthalten, verwendet werden oder alternativ eine Kombination aus lokaler IP-Adresse und Adresse oder Bezeichner der Service-Komponente. Alternativ kann die Service-Komponente einfach prüfen, ob für ihre eigene Adresse ein Zertifikat vorliegt.

Liegt kein Zertifikat vor, so fordert die Service-Komponente 130 ein Zertifikat von einem externen Zertifizierer an. Liegt das Zertifikat vor, erwidert die Service-Komponente die Verbindungsanfrage, indem sie über den Server 120 eine Verbindung mit dem Client 110 initialisiert. Hierzu übermittelt die Service-Komponente 130 zunächst das Zertifikat an den Client 110, um diesem zu ermöglichen, die Authentizität des Servers 120 zu identifizieren. Eine solche Identifizierung erfolgt beispielsweise durch Überprüfen des Zertifikats mittels Prüfalgorithmen oder mittels Kommunikation zwischen Client 110 und externem Zertifizierer. Ab diesem Zeitpunkt können zwischen Client und Service-Komponente Datenpakete übermittelt werden. Die Service-Komponente reicht eintreffende Datenpakete an das durch die ermittelte Adresse angegebene Endgerät. Dort werden die Datenpakete verarbeitet und beantwortet, wobei Antwortpakete der Endgeräte über die Service-Komponente 130 und den Server 120 zurück an den Client geleitet werden.

Das System 100 ermöglicht auch zertifizierte Verbindungen zwischen zwei Endgeräten, die mit der gleichen Service-Komponente verbunden sind, beispielsweise Endgeräte 140 und 150. Hierzu sendet beispielsweise das Endgerät 140 eine Verbindungsanfrage, die an den Host-Namen adressiert ist, der von dem Server 120 für das zweite Endgerät 150 bereitgestellt wird.

In einer ersten Ausführungsform erkennt die Service-Komponente 130, dass die Verbindungsanfrage an ein mit ihr verbundenes Endgerät gerichtet ist, beispielsweise mittels Interpretation des Host-Namens, wie oben erläutert. In dieser Ausführungsform prüft die Service-Komponente 130, ob ein Zertifikat für das zweite Endgerät vorliegt, und fordert gegebenenfalls ein Zertifikat an. Anschließend wird die Verbindung initialisiert, wobei nachfolgend eintreffende Datenpakete, die zu dieser Verbindung gehören und entsprechend adressiert sind, ohne Umweg über den Server 120 an das jeweilige Endgerät weitergeleitet werden.

In einer zweiten Ausführungsform erkennt die Service-Komponente 130 den Host-Name der Verbindungsanfrage nicht, sondern leitet ihn an den Server 110 weiter. Dieser bildet den Host-Namen gemäß hier beschriebenen Ausführungsformen auf die lokale IP-Adresse des betreffenden Endgerätes ab und leitet die Verbindungsanfrage zurück an die Service-Komponente 130, beispielsweise unter Verwendung der lokalen IP-Adresse des Ziel-Endgerätes. Anschließend führt die Service-Komponente 130 die bereits mehrfach erläuterte Prüfung auf ein Zertifikat durch und initialisiert die Verbindung zwischen beiden Endgeräten. Datenpakete, die anschließend bei der Service-Komponente eintreffen und von dieser als zu der initialisierten Verbindung gehörend erkannt werden, werden ohne Umweg über den Server 120 an ihr Ziel geleitet. Eine solche Erkennung kann beispielsweise anhand einer Routingtabelle der Service-Komponente 130 durchgeführt werden. Insbesondere kann die Service-Komponente anhand protokollierter Quell- und Zieladressen sowie Portnummern oder anderen eindeutigen Bezeichnern von Verbindungen erkennen, zu welcher Verbindung ein Datenpaket gehört, und das Datenpaket entsprechend intern oder extern weiterleiten. Ein derartiger eindeutiger Bezeichner kann etwa ein Verbindungsport, eine IP-Adresse oder eine Kombination aus Verbindungsport und IP-Adresse sein.

Die in Figur 1 gezeigten Endgeräte 140 und 150 sowie die Service-Komponente 130 und der Client 110 haben lediglich Symbolcharakter. Die Erfindung umfasst Systeme, bei denen beliebig viele Service-Komponenten und Endgeräte miteinander verbunden sind.

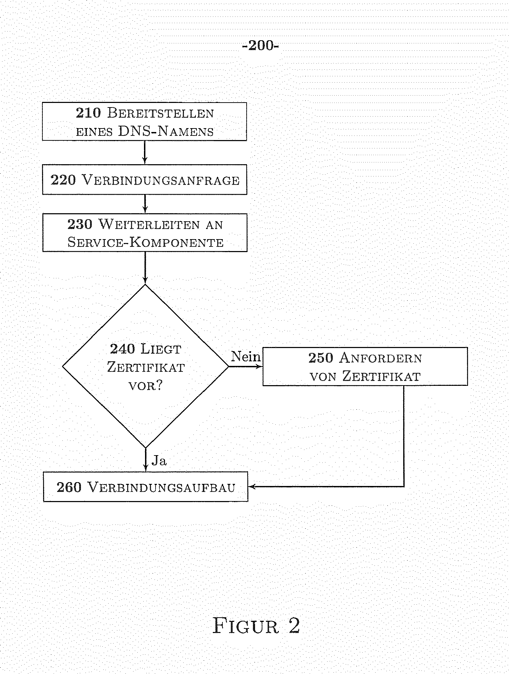

Figur 2 zeigt ein beispielhaftes Verfahren 200 zum Aufbau einer Verbindung zwischen einem Client und einem Endgerät.

Zunächst erfolgt durch einen Server, beispielsweise Server 120, Bereitstellen 210 eines Host-Namens für jeden aus einer Anzahl von Endgeräten, wie etwa den Endgeräten 140 und 150.

Der Server erhält in Schritt 220 eine Verbindungsanfrage von einem Client, beispielsweise Client 110, die an einen der bereitgestellten Host-Namen gerichtet ist. Beispielsweise entsprechen sämtliche dieser Host-Namen einer oder mehreren dem Server zugeordneten global gültigen IP-Adressen. Als Antwort auf Erhalt dieser Verbindungsanfrage ermittelt der Server zunächst den eigentlichen Adressaten der Verbindungsanfrage. Hierzu kann der Server einen ersten Bestandteil des Host-Namens, etwa eine Anfangszeichenkette, in einer Tabelle nachschlagen, um lokale Adressen für Service-Komponente und/oder Endgerät zu erhalten. Alternativ kann der Server diese Adressen unmittelbar aus einem Bestandteil des Host-Namens, also etwa der Anfangszeichenkette, extrahieren, beispielsweise durch Parsieren der Anfangszeichenkette in weitere Zeichenketten, die eine lokale IP-Adresse des Endgerätes und einen Bezeichner oder ebenfalls IP-Adresse der Service-Komponente enthalten.

Anhand der ermittelten Adresse der Service-Komponente wird die Verbindungsanfrage in Schritt 230 an diese Service-Komponente weitergeleitet. Die Service-Komponente prüft daraufhin in Schritt 240, ob für den betreffenden Adressaten, also entweder für die Service-Komponente selbst oder ein adressiertes Endgerät, ein Zertifikat vorliegt. Ist dies nicht der Fall, wird in Schritt 250 ein Zertifikat für den Adressaten von einem externen Zertifizierer angefordert.

Liegt ein Zertifikat vor, initialisiert die Service-Komponente in Schritt 260 die Verbindung. Hierzu kann das Zertifikat an den Client gesendet werden, um diesem eine Prüfung der Authentizität des Servers zu ermöglichen. Weitere Datenpakete, die von dem Client an den gleichen Adressaten gesendet werden, erreichen die Service-Komponente auf dem oben beschriebenen Weg und werden von dort aus an das betreffende Endgerät geleitet. Das Endgerät verarbeitet das Datenpaket und sendet eine Antwort an die Service-Komponente. Die Antwort wird über den Server an den Client weitergeleitet.

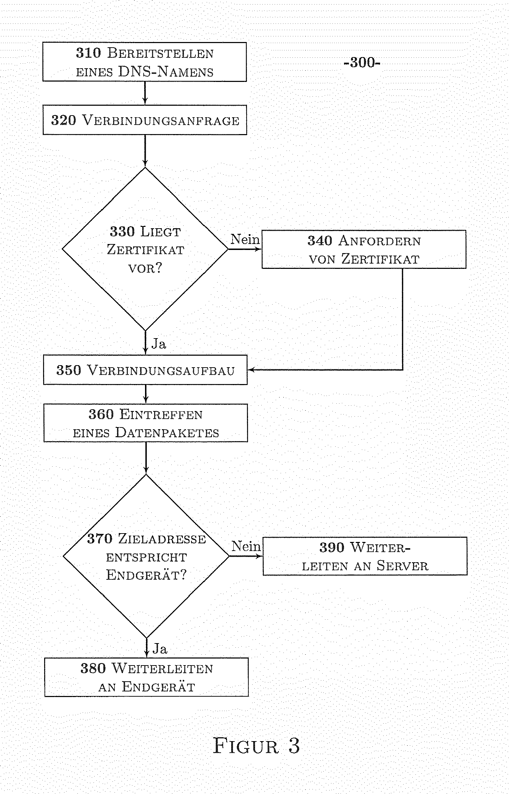

Figur 3 zeigt ein beispielhaftes Verfahren 300 zum Aufbau einer Verbindung zwischen einem ersten und einem zweiten Endgerät im gleichen lokalen Netzwerk.

Analog zu Schritt 210 in Figur werden in Schritt 310 durch einen Server, etwa Server 120, Host-Namen für Endgeräte bereitgestellt. Die Host-Namen sind einer oder mehreren global gültigen IP-Adressen des Servers zugeordnet, so dass Anfragen, die an diese Host-Namen beziehungsweise IP-Adressen gerichtet werden, den Server 210 erreichen. Erfolgt beispielsweise eine Verbindungsanfrage an einen solchen Host-Namen, erreicht diese in Schritt 320 den Server 120. Dies gilt auch für solche Verbindungsanfragen, die von einem Endgerät in einem lokalen Netzwerk stammen, also beispielsweise von einem Endgerät 140 oder 150, das lediglich über eine Service-Komponente mit dem Server 120 verbunden ist und nur über eine lokal gültige IP-Adresse verfügt. Sendet ein solches Endgerät eine Verbindungsanfrage an einen Host-Namen, der einem anderen der mit der Service-Komponente verbundenen Endgerät entspricht, so wird diese Verbindungsanfrage von der Service-Komponente an den Server 120 weitergeleitet. Dieser erkennt, beispielsweise aufgrund der Struktur des verwendeten Host-Namens und/oder aufgrund einer Tabelle, die Host-Namen auf lokale IP-Adressen abbildet, dass die Verbindungsanfrage von einer mit dem Server 120 verbundenen Service-Komponente stammt und sendet die Verbindungsanfrage daher an die betreffende Service-Komponente zurück. Wie beschrieben, geht diesem Vorgang etwa ein Parsieren von Zeichenketten des Host-Namens oder Nachschlagen in einer Tabelle voraus.

Die Service-Komponente prüft in Schritt 330, ob für den Host-Namen bereits ein Zertifikat vorliegt, und fordert dieses gegebenenfalls in Schritt 340 an. Anschließend erfolgt in Schritt 350 der eigentliche Verbindungsaufbau, beispielsweise durch den Austausch von Paketen zwischen den Verbindungsteilnehmern gemäß einem der Verbindung zugrundeliegenden Protokoll.

In Schritt 360 erhält die Service-Komponente ein Datenpaket, und prüft in Schritt 370, ob dieses zu einer Verbindung mit einem der Endgeräte der Service-Komponete gehört. Diese Prüfung kann beispielsweise anhand einer Routingtabelle erfolgen, die der Service-Komponente vorliegt, und in der für jede der Service-Komponente bekannten Verbindung die IP-Adresse der anfragenden Einheit und die IP-Adresse der angefragten Einheit sowie eine Portnummer vermerkt ist. Selbst wenn das Datenpaket an den global gültigen Host-Namen des Ziel-Endgerätes adressiert ist, leitet die Service-Komponente das Datenpaket in diesem Falle nicht an den Server weiter, sondern an das betreffende Ziel-Endgerät, Schritt 380. Lediglich wenn das Datenpaket keiner internen Verbindung zugeordnet werden kann, wird es in Schritt 390 an den Server weitergeleitet.

Die Erfindung ermöglicht somit, zertifizierte Punkt-zu-Punkt-Verbindungen sowohl zwischen externen Clients und netzwerkinternen Endgeräten als auch zwischen Endgeräten aufzubauen, denen keine global gültige IP-Adresse zugeordnet ist. Die Erfindung minimiert den Aufwand für das Erstellen von Zertifikaten, da diese lediglich bei Bedarf angefordert werden, und vermeidet außerdem eine Weiterleitung von internen Datenpaketen, die innerhalb eines lokalen Netzwerkes versendet werden, auch wenn diese Datenpakete an einen global gültigen Host-Namen oder eine global gültige IP-Adresse gerichtet sind, der auf ein lokales Endgerät abgebildet wird.

## Patentansprüche

1. System (100), umfassend:
einen Client (110);
einen Server (120);
eine mit dem Server (120) verbundene Service-Komponente (130); und
mehrere Endgeräte (140, 150), die mit der Service-Komponente (130) verbunden ist;
wobei der Server (120) für jedes der Endgeräte (140, 150) einen Host-Namen bereitstellt, der dem jeweiligen Endgerät (140, 150) sowie der Service-Komponente (130) zugeordnet ist;
wobei der Server (120) eingerichtet ist, als Antwort auf eine Verbindungsanfrage des Clients (110) oder eines der Endgeräte (140, 150) an einen der Host-Namen die Verbindungsanfrage an die Service-Komponente (130) weiterzuleiten;
wobei die Service-Komponente (130) eingerichtet ist, als Antwort auf die Verbindungsanfrage zu prüfen, ob für das Endgerät (140, 150), dem der Host-Name zugeordnet ist, ein Zertifikat zur Verschlüsselung einer Verbindung mit diesem Endgerät (140, 150) vorliegt, wobei die Service-Komponente (130) von einem Zertifizierer ein Zertifikat anfordert, falls kein Zertifikat vorliegt, und anhand des Zertifikats die Verbindung initialisiert; und
wobei die Service-Komponente (130) ferner eingerichtet ist, nach dem Initialisieren der Verbindung ein eintreffendes Datenpaket, das an den Host-Namen adressiert ist, ohne Umweg über den Server (120) direkt an das Endgerät (140, 150) weiterzuleiten, wenn das Datenpaket der Verbindung zugeordnet ist und die Verbindung von einem der Endgeräte (140, 150) aufgebaut worden war, und das Datenpaket an den Server (120) weiterzuleiten, wenn die Verbindung nicht von einem der Endgeräte (140, 150) aufgebaut worden war.

2. System (100) nach Anspruch 1, wobei die Service-Komponente (130) ferner eingerichtet ist, anhand einer Routingtabelle zu bestimmen, ob eine Verbindung, die einem eintreffenden Datenpaket zugeordnet ist, von einem der Endgeräte (140, 150) aufgebaut worden war, wobei die Routingtabelle wenigstens eine Herkunftsadresse des jeweiligen Endgerätes (140, 150) sowie einen eindeutigen Bezeichner der jeweiligen Verbindung enthält.

3. System (100) nach Anspruch 3, wobei der eindeutige Bezeichner ein Verbindungsport ist.

4. System (100) nach einem der Ansprüche 1 bis 3, wobei wenigstens eines der Endgeräte (140, 150) mit der Service-Komponente identisch ist.

5. System (100) nach einem der Ansprüche 1 bis 4, wobei in dem Host-Namen eine lokale Adresse eines der Endgeräte (140, 150) enthalten ist.

6. Service-Komponente (130), die mit einem Server (120) verbunden und eingerichtet ist, als Antwort auf eine Verbindungsanfrage eines Clients (110) oder eines von mehreren Endgeräten (140, 159), die mit der Service-Komponente (130) verbunden sind, an einen von mehreren Host-Namen, die von dem Server (120) für die Endgeräte (140, 150) bereitgestellt werden, zu prüfen, ob für das Endgerät (140, 150) des Host-Namens ein Zertifikat zur Verschlüsselung einer Verbindung mit diesem Endgerät (104, 150) vorliegt, wobei die Service-Komponente (130) von einem Zertifizierer ein Zertifikat anfordert, falls kein Zertifikat vorliegt, und anhand des Zertifikats die Verbindung initialisiert; und
wobei die Service-Komponente (130) ferner eingerichtet ist, nach dem Initialisieren ein eintreffendes Datenpaket, das an den Host-Namen adressiert ist, ohne Umweg über den Server (120) direkt an das Endgerät (140, 150) weiterzuleiten, wenn das Datenpaket der Verbindung zugeordnet ist und die Verbindung von einem mit der Service-Komponente (130) verbundenen Endgerät (140, 150) aufgebaut worden war, und das Datenpaket an den Server (120) weiterzuleiten, wenn die Verbindung nicht von einem mit der Service-Komponente verbundenen Endgerät (140, 150) aufgebaut worden war.

7. Service-Komponente (130) nach Anspruch 6, wobei die Service-Komponente ferner eingerichtet ist, anhand einer Routingtabelle zu bestimmen, ob eine Verbindung, die einem eintreffenden Datenpaket zugeordnet ist, von einem der Endgeräte (140, 150) aufgebaut worden war, wobei die Routingtabelle wenigstens eine Herkunftadresse des jeweiligen Endgerätes (140, 150) sowie einen eindeutigen Bezeichner der jeweiligen Verbindung enthält.

8. Service-Komponente (130) nach Anspruch 7, wobei der eindeutige Bezeichner ein Verbindungsport ist.

9. Service-Komponente (130) nach einem der Ansprüche 6 bis 8, wobei wenigstens eines der Endgeräte (140, 150) mit der Service-Komponente identisch ist.

10. Service-Komponente nach einem der Ansprüche 6 bis 9, wobei in dem Host-Namen eine lokale Adresse eines der Endgeräte enthalten ist.

11. Verfahren (300), umfassend:
Bereitstellen (310), durch einen mit einer Service-Komponente (130) verbundenen Server (120), eines jeweiligen Host-Namens für mehrere mit der Service-Komponente (130) verbundene Endgeräte (140, 150),
Prüfen (330), durch die Service-Komponente (130) als Antwort auf eine Verbindungsanfrage eines Clients (110) oder eines der Endgeräte (140, 150) an einen der Host-Namen, ob für das dem Host-Namen entsprechende Endgerät (140, 150) ein Zertifikat zur Verschlüsselung einer Verbindung mit diesem Endgerät (140, 150) vorliegt, wobei die Service-Komponente (130) von einem Zertifizierer ein Zertifikat anfordert, falls kein Zertifikat vorliegt, und anhand des Zertifikats die Verbindung initialisiert; und
Weiterleiten (380), durch die Service-Komponente (130), eines eintreffenden Datenpakets, das an den Host-Namen adressiert ist, ohne Umweg über den Server (120) direkt an das Endgerät (140, 150), wenn das Datenpaket der Verbindung zugeordnet ist und die Verbindung von einem der Endgeräte (140, 150) aufgebaut worden war, und Weiterleiten (390) des Datenpakets an den Server (120), wenn die Verbindung nicht von einem der Endgeräte (140, 150) aufgebaut worden war.

12. Verfahren (300) nach Anspruch 11, ferner umfassend Bestimmen, durch die Service-Komponente (130) anhand einer Routingtabelle, ob eine Verbindung, die einem eintreffenden Datenpaket zugeordnet ist, von einem der Endgeräte (140, 150) aufgebaut worden war, wobei die Routingtabelle wenigstens eine Herkunftsadresse des jeweiligen Endgerätes (140, 150) sowie einen eindeutigen Bezeichner der jeweiligen Verbindung enthält.

13. Verfahren (300) nach Anspruch 12, wobei der eindeutige Bezeichner ein Verbindungsport ist.

14. Verfahren (300) nach einem der Ansprüche 11 bis 13, wobei in dem Host-Namen eine lokale Adresse eines der Endgeräte (140, 150) enthalten ist.

15. Computerlesbares Medium mit Befehlen, die, wenn sie durch einen oder mehrere Prozessoren ausgeführt werden, das Verfahren nach einem der Ansprüche 11 bis 14 durchführen.

## Claims

1. A system (100), comprising:
a client (110);
a server (120);
a service component (130) connected to the server (120); and
multiple terminals (140, 150) connected to the service component (130);
wherein the server (120) provides a host name for each terminal (140, 150), said host name being assigned to the respective terminal (140, 150) and to the service component (130);
wherein the server (120) is configured to respond to a connection request from the client (110) or one of the terminals (140, 150) to one of the host names by forwarding the connection request to the service component (130);
wherein the service component (130) is configured to respond to the connection request by reviewing whether a certificate for encrypting a connection with the terminal (140, 150) is on file associated with the host name, wherein the service component (130) requests a certificate from a certification authority if no certificate is on file and the service component initiates the connection based on the certificate; and
wherein the service component (130), after initiating the connection, furthermore is configured to forward an incoming data packet addressed to the host name directly to the terminal (140, 150) without going through the server (120), if the data packet is associated with the connection and the connection had been established by one of the terminals (140, 150) and to forward the data packet to the server (120) if the connection had not been established by one of the terminals (140, 150).

2. The system (100) according to claim 1, wherein the service component (130) furthermore is configured to use a routing table to determine whether a connection associated with an incoming data packet had been established by one of the terminals (140, 150), wherein the routing table contains at least one originating address of the respective terminal (140, 150) as well as a unique identifier of the respective connection.

3. The system (100) according to claim 2, wherein the unique identifier is a connection port.

4. The system (100) according to any one of Claims 1 to 3, wherein at least one of the terminals (140, 150) is identical to the service component.

5. The system (100) according to any one of the Claims 1 to 4, wherein the host name contains a local address of one of the terminals (140, 150).

6. A service component (130) connected to a server (120) and configured to respond to a connection request from a client (110) or one of multiple terminals (140, 150) connected to the service component (130) to one of multiple host names provided by the server (120) for the terminals (140, 150) by reviewing whether a certificate for encrypting a connection with the terminal (140, 150) is on file for the terminal (140, 150) of the host name, wherein the service component (130) requests a certificate from a certification authority if no certificate is on file and the service component initiates the connection based on the certificate; and
wherein the service component (130), after initiating the connection, furthermore is configured to forward an incoming data packet addressed to the host name directly to the terminal (140, 150) without going through the server (120), if the data packet is associated with the connection and the connection had been established by a terminal (140, 150) connected to the service component (130), and to forward the data packet to the server (120) if the connection had not been established by a terminal (140, 150) connected with the service component.

7. The service component (130) according to claim 6, wherein the service component furthermore is configured to use a routing table to determine whether a connection associated with an incoming data packet had been established by one of the terminals (140, 150), wherein the routing table contains at least one originating address of the respective terminal (140, 150) as well as a unique identifier of the respective connection.

8. The service component (130) according to claim 7, wherein the unique identifier is a connection port.

9. The service component (130) according to any one of Claims 6 to 8, wherein at least one of the terminals (140, 150) is identical to the service component.

10. The service component according to any one of Claims 6 to 9, wherein the host name contains a local address or a local host name of one of the terminals.

11. A method (300), comprising:
providing (310), by a server (120) connected with a service component (130), a respective host name for multiple terminals (140, 150) connected to the service component (130),
reviewing (330), by the service component (130), in response to a connection request from a client (110) or one of the terminals (140, 150) to one of the host names, whether a certificate for encrypting a connection to the terminal (140, 150) is on file for the terminal (140, 150) corresponding to the host name, wherein the service component (130) requests a certificate from a certification authority if no certificate is on file and the service component (130) initiates the connection based on the certificate; and
forwarding (380), by the service component (130), of an incoming data packet addressed to the host name directly to the terminal (140, 150) without going through the server (120), if the data packet is associated with the connection and the connection had been established by one of the terminals (14, 150), and forwarding (390) the data packet to the server (120) if the connection had not been established by one of the terminals (140, 150).

12. The method (300) according to Claim 11, furthermore comprising the use of a routing table by the service component (130) for determining whether a connection associated with an incoming data packet had been established by one of the terminals (140, 150), wherein the routing table contains at least one originating address of the respective terminal (140, 150) as well as a unique identifier of the respective connection.

13. The method (300) according to Claim 12, wherein the unique identifier is a connection port.

14. The method (300) according to any one of Claims 11 to 13, wherein the host name contains a local address or a local host name of one of the terminals (140, 150).

15. A computer-readable medium with commands, which perform the method according to any one of Claims 11 to 14 when said commands are executed by one or multiple processors.

## Revendications

1. Système (100), comprenant :
un client (110) ;
un serveur (120) ;
un composant de service (130) connecté au serveur (120) ; et
plusieurs terminaux (140, 150) qui sont connectés au composant de service (130) ;
le serveur (120) fournissant pour chacun des terminaux (140, 150) un nom d'hôte qui est affecté au terminal (140, 150) respectif ainsi qu'au composant de service (130) ;
le serveur (120) étant agencé pour, en réponse à une demande de connexion du client (110) ou de l'un des terminaux (140, 150) à l'un des noms d'hôte, transmettre la demande de connexion au composant de service (130) ;
le composant de service (130) étant agencé pour, en réponse à la demande de connexion à l'un des noms d'hôte, contrôler la présence, pour le terminal (140, 150) auquel est affecté le nom d'hôte, d'un certificat de cryptage d'une connexion à ce terminal (140, 150),
le composant de service (130) demandant un certificat à un certificateur en cas d'absence de certificat, et initialisant la connexion à l'aide du certificat ; et
le composant de service (130) étant en outre agencé pour, après l'initialisation de la connexion, transmettre directement au terminal (140, 150), sans détour via le serveur (120), un paquet de données entrant qui est adressé au nom d'hôte quand le paquet de données est affecté à la connexion et quand la connexion a été établie par l'un des terminaux (140, 150), et pour transmettre le paquet de données au serveur (120) quand la connexion n'a pas été établie par l'un des terminaux (140, 150).

2. Système (100) selon la revendication 1, le composant de service (130) étant en outre agencé pour, à l'aide d'une table de routage, déterminer si une connexion qui est affectée à un paquet de données entrant a été établie par l'un des terminaux (140, 150), la table de routage contenant au moins une adresse source du terminal (140, 150) respectif ainsi qu'un identificateur univoque de la connexion respective.

3. Système (100) selon la revendication 3, l'identificateur univoque étant un port de connexion.

4. Système (100) selon l'une des revendications 1 à 3, au moins l'un des terminaux (140, 150) étant identique au composant de service.

5. Système (100) selon l'une des revendications 1 à 4, une adresse locale de l'un des terminaux (140, 150) étant contenue dans le nom d'hôte.

6. Composant de service (130), qui est connecté à un serveur (120) et est agencé pour, en réponse à une demande de connexion d'un client (110), ou de l'un de plusieurs terminaux (140, 150) qui sont connectés au composant de service (130), à l'un de plusieurs noms d'hôte qui sont fournis par le serveur (120) pour les terminaux (140, 150), contrôler la présence, pour le terminal (140, 150) du nom d'hôte, d'un certificat de cryptage d'une connexion à ce terminal (140, 150), le composant de service (130) demandant un certificat à un certificateur en cas d'absence de certificat, et initialisant la connexion à l'aide du certificat ; et
le composant de service (130) étant en outre agencé pour, après l'initialisation, transmettre directement au terminal (140, 150), sans détour via le serveur (120), un paquet de données entrant qui est adressé au nom d'hôte quand le paquet de données est affecté à la connexion et quand la connexion a été établie par un terminal (140, 150) raccordé au composant de service (130), et pour transmettre le paquet de données au serveur (120) quand la connexion n'a pas été établie par un terminal (140, 150) raccordé au composant de service.

7. Composant de service (130) selon la revendication 6,
le composant de service étant en outre agencé pour, à l'aide d'une table de routage, déterminer si une connexion qui est affectée à un paquet de données entrant a été établie par l'un des terminaux (140, 150), la table de routage contenant au moins une adresse source du terminal (140, 150) respectif ainsi qu'un identificateur univoque de la connexion respective.

8. Composant de service (130) selon la revendication 7, l'identificateur univoque étant un port de connexion.

9. Composant de service (130) selon l'une des revendications 6 à 8, au moins l'un des terminaux (140, 150) étant identique au composant de service.

10. Composant de service selon l'une des revendications 6 à 9, une adresse locale de l'un des terminaux (140, 150) étant contenue dans le nom d'hôte.

11. Procédé (300), comprenant :
fourniture (310), par un serveur (120) connecté à un composant de service (130), d'un nom d'hôte respectif pour plusieurs terminaux (140, 150) connectés au composant de service (130),
contrôle (330), par le composant de service (130), en réponse à une demande de connexion d'un client (110) ou de l'un des terminaux (140, 150) à l'un des noms d'hôte, de la présence, pour le terminal (140, 150) correspondant au nom d'hôte, d'un certificat de cryptage d'une connexion à ce terminal (140, 150), le composant de service (130) demandant un certificat à un certificateur en cas d'absence de certificat, et initialisant la connexion à l'aide du certificat ; et
transmission (380) directement au terminal (140, 150), par le composant de service (130), d'un paquet de données entrant qui est adressé au nom d'hôte sans détour via le serveur (120) quand le paquet de données est affecté à la connexion et quand la connexion a été établie par l'un des terminaux (140, 150), et transmission (390) du paquet de données au serveur (120) quand la connexion n'a pas été établie par l'un des terminaux (140, 150).

12. Procédé (300) selon la revendication 11, comprenant en outre la détermination, par le composant de service (130) à l'aide d'une table de routage, indiquant si une connexion qui est affectée à un paquet de données entrant a été établie par l'un des terminaux (140, 150), la table de routage contenant au moins une adresse source du terminal (140, 150) respectif ainsi qu'un identificateur univoque de la connexion respective.

13. Procédé (300) selon la revendication 12, l'identificateur univoque étant un port de connexion.

14. Procédé (300) selon l'une des revendications 11 à 13, une adresse locale de l'un des terminaux (140, 150) étant contenue dans le nom d'hôte.

15. Support lisible par ordinateur, avec des instructions qui, quand elles sont exécutées par un ou plusieurs processeurs, réalisent le procédé selon l'une des revendications 11 à 14.
